# EUROPÄISCHE PATENTSCHRIFT

(11) **EP 3 842 681 B1**
(45) Veröffentlichungstag und Bekanntmachung des Hinweises auf die Patenterteilung: **09.11.2022**
(21) Anmeldenummer: 19306774.1
(22) Anmeldetag: 26.12.2019
(51) Int. Cl.: F16L 35/00, F16L 39/00, F16L 59/14, F16L 59/18, F16L 23/10

(54) **SCHNELL TRENNENDE JOHNSTON STECKKUPPLUNG**
QUICK RELEASE JOHNSTON PLUG-IN COUPLING
RACCORD ENFICHABLE JOHNSTON À DÉCONNEXION RAPIDE

(43) Veröffentlichungstag der Anmeldung: 30.06.2021
(73) Patentinhaber: Nexans, 92400 Courbevoie (FR)
(72) Erfinder: SCHULZ, Holger, 30179 HANNOVER (DE); WEBER, Patrick, 31008 ELZE (DE)
(74) Vertreter: Ipsilon

(56) Entgegenhaltungen:
- EP-A2- 0 879 986
- WO-A1-2016/051770
- JP-A- H10 231 970
- US-A1- 2008 169 037

## Beschreibung

### Gebiet

Die Erfindung betrifft eine Steckkupplung für vakuumisolierte flexible Leitungen, die auch unter dem Begriff "Johnston-Kupplung" bekannt ist. Insbesondere betrifft die Erfindung eine schnell trennende Johnston-Kupplung.

### Hintergrund

Tiefkalte Medien, die auch als kryogene Flüssigkeiten bezeichnet werden, werden häufig auf Schiffen, in Tankwaggons oder auf Tanklastwagen transportiert. Ein wichtiges Beispiel hierfür ist flüssiges Erdgas (LNG), das eine Verdampfungstemperatur von -162 °C (111 K) hat. Die Verladung wird typischerweise mit nicht-isolierten Leitungen und Kupplungen durchgeführt, die während der Verladung vereisen. Die fehlende Wärmeisolierung führt zur Verdampfung eines Teils des tiefkalten Mediums, was mit einem Energieverlust einhergeht, denn das verdampfte Medium muss an anderer Stelle mit hohem Energieaufwand wieder verflüssigt werden.

Bei der Verladung noch kälterer Medien, zum Beispiel flüssigem Wasserstoff (Verdampfungstemperatur -253 °C, 20 K) oder flüssigem Helium (Verdampfungstemperatur -269 °C, 4 K) würde an der Oberfläche von nicht-isolierten Leitungen und Kupplungen der Sauerstoff in der Umgebungsluft kondensieren, dessen Verdampfungstemperatur vergleichsweise höher ist (-183 °C; 90 K). Das ist höchst unerwünscht, weil durch flüssigen Sauerstoff eine potentielle Brandgefahr erheblich steigt.

Darüber hinaus sind für den Transport von solchen kryogenen Flüssigkeiten oder Medien auch vakuumisolierte Leitungen bekannt, die beispielsweise von der Firma Nexans hergestellt werden. Für Tank- und Verladezwecke sind die vakuumisolierten Leitungen flexibel ausgebildet und an einem Ende mit einer sogenannten Johnston-Kupplung ausgerüstet, mittels der zwei kryogene Leitungen verbindbar sind, ohne dass an der Verbindungsstelle die Wärmeisolierung verloren geht. Dadurch werden eine Vereisung der Kupplungsstelle und Verluste des kryogenen Mediums durch Verdampfung verringert. Eine Johnston-Kupplung ist beispielsweise in der EP 1 957 851 B1 oder WO 2016051770 A1 offenbart.

Einfach ausgedrückt werden bei einer Johnston-Kupplung zwei doppelwandige vakuumisolierte Rohrleitungen ineinandergesteckt. Die Innendurchmesser solcher Rohrleitungen betragen typischerweise zwischen 20 mm und 150 mm. Grundsätzlich sind aber auch kleinere oder größere Innendurchmesser möglich. Das männliche Teil (innere doppelwandige Rohrleitung) wird in das weibliche Teil (äußere doppelwandige Rohrleitung) gesteckt. Man spricht auch von Kupplungsstecker und Kupplungsdose. Dadurch wird die äußere Oberfläche sehr gut zum inneren medienführenden Rohr wärmeisoliert. Hierfür müssen beide doppelwandige Rohrleitungen über eine vorbestimmte Länge ineinandergesteckt werden. Je nach Medium und gewünschter Wärmeisolierung liegen typische Rohr-in-Rohr-Längen im Bereich von 200 mm bis 600 mm. Abweichungen zu kleineren oder größeren Längen sind bei einzelnen Anwendungsfällen möglich.

Für einfache, d.h. nicht vakuumisolierte Leitungen, die bei Tankvorgängen zwischen Schiffen und Uferanlagen oder landgebundenen Tankfahrzeugen und einer Tankanlage eingesetzt werden, sogenannte Nottrennkupplungen vorgesehen, die eine Leitung bei einer bestimmten Zugbelastung trennen und verschließen. Wenn beispielsweise ein Schiff von einer Kaimauer abtreibt oder ein Tankwagen wegrollt, dann könnte eine Tankleitung abreißen und möglicherweise feuergefährliches Medium austreten. Das verhindert die Nottrennkupplung, welche die Leitung trennt und die beiden Leitungsenden mithilfe von Rückschlagventilen verschließt.

Im Gegensatz zu herkömmlichen Nottrennkupplungen stecken bei der Johnston-Kupplung zwei vakuumisolierte Kupplungshälften vergleichsweise weit ineinander, was sich nachteilig auf ein schnelles Trennen auswirken kann. Herkömmliche Nottrennkupplungen sind für vakuumisolierte Leitungen bzw. Johnston-Kupplungen nicht geeignet

Hiervon ausgehend hat die vorliegende Erfindung die Aufgabe, eine Steckkupplung für vakuumisolierte Kryoleitungen mit einer Verbindung zu schaffen, die im Notfall schnell getrennt werden kann.

### Zusammenfassung der Erfindung

Zur Lösung dieser Aufgabe schlägt die Erfindung nach einem ersten Aspekt eine Steckkupplung zum Verbinden einer ersten mit einer zweiten doppelwandigen vakuumisolierten Kryoleitung vor. Die Steckkupplung umfasst einen Kupplungsstecker und eine Kupplungsdose. Der Kupplungsstecker weist ein inneres und ein äußeres Rohrstück sowie einen ersten Anschlussflansch auf und ist mit der ersten Kryoleitung verbunden. Die Kupplungsdose weist ein inneres und ein äußeres Rohrstück sowie einen zweiten Anschlussflansch auf und ist mit der zweiten Kryoleitung verbunden. Der Kupplungsstecker ist in die Kupplungsdose einsteckbar, die von Fixiermitteln in einem zusammengesteckten Zustand gehalten sind. Eine Führungssäule ist an dem Kupplungsstecker oder der Kupplungsdose angeordnet. Die Führungssäule ist in eine an der Kupplungsdose angeordnetes Führungsmittel oder einen Führungszylinder aufgenommen, wenn der Kupplungsstecker in dem Kupplungsstecker steckt. An der Führungssäule sind elastische Mittel angeordnet, die im zusammengebauten Zustand der Steckkupplung gespannt sind und Kupplungsstecker bzw. Kupplungsdose mit einer elastischen Kraft beaufschlagen, die bestrebt ist, Kupplungsstecker und Kupplungsdose voneinander zu trennen, sobald die Fixiermittel Kupplungsstecker und Kupplungsdose nicht mehr zusammenhalten.

Die in den elastischen Mitteln gespeicherte elastische Energie sorgt dafür, dass in einem Notfall Kupplungsstecker und Kupplungsdose rasch voneinander getrennt werden. Die Führungssäule verhindert, dass sich bei der Trennung der Kupplungsstecker in der Kupplungsdose verkantet und eine schnelle Trennung behindert oder sogar verhindert.

In einer vorteilhaften Weiterbildung der erfindungsgemäßen Steckkupplung sind mehrere Führungssäulen vorhanden, denen jeweils ein elastisches Mittel zugeordnet ist. Eine Mehrzahl von elastischen Mitteln stellt größere Kräfte bereit, die für eine schnelle Trennung der Steckkupplung sorgen. Außerdem verbessern mehrere Führungssäulen die Führung von Kupplungsstecker bzw. Kupplungsdose, wodurch ein Verkanten noch unwahrscheinlicher ist.

Mit Vorteil ist das elastische Mittel als Feder ausgebildet. Besonders zweckmäßig ist es, wenn die Feder als Schraubenfeder ausgebildet ist, die auf eine Führungssäule gesteckt ist. Diese Anordnung hat den Vorteil, dass zusätzliche Haltemittel für die Schraubenfedern verzichtbar sind.

Mit Vorteil sind den Führungssäulen Aufnahmen zugeordnet, die so bemessen sind, dass die komprimierte Schraubenfeder darin Platz findet. Die komprimierten Schraubenfedern behindern dadurch nicht den Zusammenbau der Steckkupplung. Insbesondere der erste und der zweite Anschlussflansch liegen dicht aufeinander.

Zweckmäßigerweise kann jeder Führungssäule ein Führungszylinder zugeordnet sein, in welchem die jeweils zugeordnete Führungssäule aufgenommen ist, wenn der Kupplungsstecker in die Kupplungsdose gesteckt ist. Führungssäule und Führungszylinder wirken zusammen und sorgen für eine gute Führung von Kupplungsstecker und -dose, insbesondere dann, wenn die Steckkupplung notfallmäßig getrennt wird.

In manchen Anwendungsfällen kann es von Vorteil sein, wenn die Führungssäulen abwechselnd an dem Kupplungsstecker bzw. an der Kupplungsdose angeordnet sind.

Zweckmäßigerweise können die Fixiermittel als Klemmschellen ausgebildet sein. Eine Klemmschelle ist simpel aufgebaut und kann von einer Bedienungsperson einfach montiert werden.

Mit besonderem Vorteil sind die Klemmschellen in eine geöffnete Stellung vorgespannt. Damit wird erreicht, dass sich die Klemmschelle von den Anschlussflanschen der Steckkupplung lösen, wenn keine besonderen Vorkehrungen dagegen getroffen werden.

Eine solche zweckmäßige Vorkehrungen kann ein Verriegelungshaken sein, der die Klemmschellen in einem geschlossenen Zustand hält.

Bei einem vorteilhaften Ausführungsbeispiel ist der Verriegelungshaken durch ein Betätigungsmittel lösbar, das zum Beispiel den Verriegelungshaken mit einem Tankfahrzeug verbindet. Wenn sich das Tankfahrzeug in unzulässiger Weise von einer Tankstelle entfernt, dann wird der Verriegelungshaken durch das Betätigungsmittel gelöst und die Fixiermittel bzw. Klemmschellen gehen auf. Daraufhin wird die Steckkupplung von den komprimierten Schraubenfedern getrennt, was verhindert, dass unzulässige Zugkräfte auf eine Tankleitung ausgeübt werden.

In der praktischen Handhabung hat es sich als vorteilhaft herausgestellt, wenn an den Klemmschellen Betätigungsmittel angeordnet sind, die das Schließen der Klemmschellen erleichtern. Beispielsweise kann eine Hebelvorrichtung vorgesehen sein, die es einer Bedienungsperson erleichtert, die Klemmschellen zu schließen.

Nach einem zweiten Aspekt der Erfindung wird eine Verladeeinrichtung für kryogene Fluide mit einer Steckkupplung gemäß dem ersten Aspekt der Erfindung vorgeschlagen. Die Verladeeinrichtung verwirklicht alle Vorteile, die im Zusammenhang mit der Steckkupplung beschrieben wurden.

### Kurze Beschreibung der Zeichnung

Nachfolgend wird die Erfindung anhand zweier Ausführungsbeispiele unter Bezugnahme auf die begleitenden Figuren exemplarisch näher erläutert. Alle Figuren sind rein schematisch und nicht maßstäblich. Es zeigen:
- Fig. 1: eine schematische Querschnittsdarstellung einer erfindungsgemäßen Steckkupplung;
- Fig. 2a: eine Draufsicht auf die Steckkupplung aus Figur 1 mit einer geöffneten Klemmschelle;
- Fig. 2b: ein Querschnitt durch die Klemmschelle aus Figur 2a;
- Fig. 3: die Steckkupplung aus Figur 1 im zusammengebauten Zustand; und
- Fig. 4: eine Draufsicht auf die Steckkupplung aus Figur 1 mit einer geschlossenen Klemmschelle.

Gleiche oder ähnliche Elemente sind in den Figuren mit gleichen oder ähnlichen Bezugszeichen versehen.

### Ausführungsbeispiel

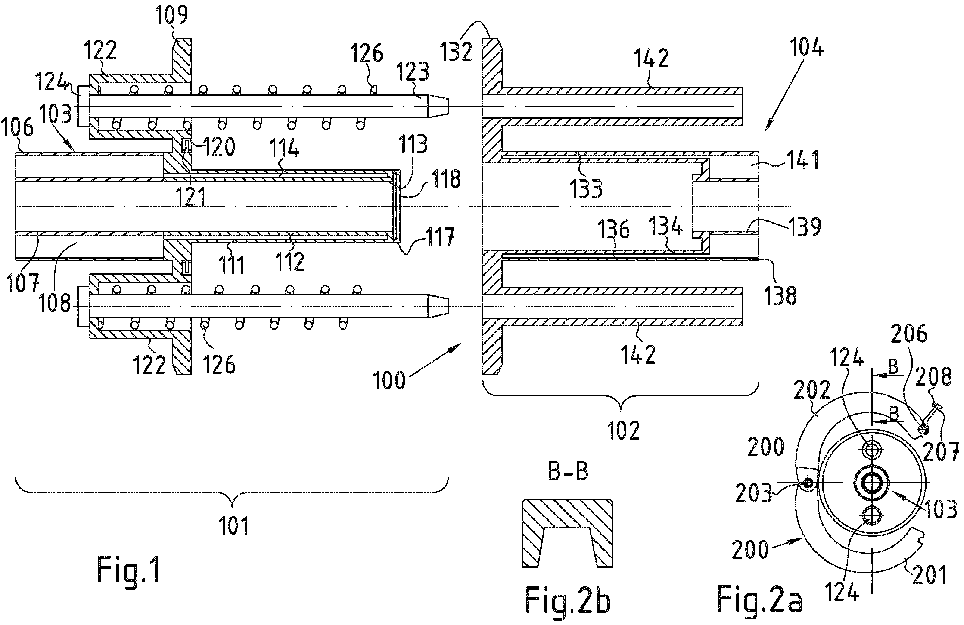

Figur 1 zeigt eine Steckkupplung, die als Ganzes mit dem Bezugszeichen 100 bezeichnet ist. Zu der Steckkupplung 100 gehören ein Kupplungsstecker 101 und eine Kupplungsdose 102, die in Figur 1 vor dem Zusammenbau und mit einem kleinen Abstand voneinander dargestellt sind.

Der Kupplungsstecker 101 ist mit einer ersten Kryoleitung 103 und die Kupplungsdose 102 mit einer zweiten Kryoleitung 104 verbunden. Die erste Kryoleitung 103 weist ein Außenrohr 106 sowie ein Innenrohr 107 auf, die durch einen Zwischenraum 108 voneinander getrennt und durch ein Isoliervakuum in dem Zwischenraum 108 thermisch voneinander isoliert sind. Die Kryoleitungen 103,104 sind doppelwandige vakuumisolierte Kryoleitungen.

Der Kupplungsstecker 101 umfasst einen ersten Anschlussflansch 109, ein äußeres Rohrstück 111 sowie ein inneres Rohrstück 112. Das Außenrohr 106 der ersten Kryoleitung 103 ist an eine erste Hauptfläche des ersten Anschlussflansches 109 angeschweißt. Auf der gegenüberliegenden Hauptfläche des Anschlussflansches 109 ist das äußere Rohrstück 111 an den ersten Anschlussflansch 109 angeschweißt. Ein von dem ersten Anschlussflansch 109 entferntes distales Ende 113 des äußeren Rohrstückes 111 ist mit dem inneren Rohrstück 112 verbunden, das sich zu dem ersten Anschlussflansch hin erstreckt und mit dem Innenrohr 107 der ersten Kryoleitung 103 verbunden ist. Zwischen dem äußeren Rohrstück 111 und dem inneren Rohrstück 112 ist ein Ringspalt 114 ausgebildet. Der Zwischenraum 108 ist mit dem Ringspalt 114 strömungsmäßig verbunden, sodass sich das Isoliervakuum bis in den Ringspalt 114 hinein erstreckt und für eine gute thermische Isolierung des inneren Rohrstückes 112 sorgt.

An dem distalen Ende 113 der Steckkupplung 101 ist das äußere Rohrstück 111 etwas länger als das innere Rohrstück 112 und bildet einen überstehenden Rand 117, der eine kreisringförmige Dichtung 118 haltert, die an dem distalen Ende 113 der Steckkupplung 101 anliegt. Die Dichtung 118 ist beispielsweise aus einem elektrisch isolierenden Material hergestellt, zum Beispiel aus Polytetrafluorethylen (PTFE) oder Torlon ^{®}. Bei anderen Ausführungsformen ist die Dichtung 118 aus elektrisch leitendem Material hergestellt. In dem ersten Anschlussflansch 109 ist eine Ringnut 120 eingestochen, in die eine Dichtung 121 eingesetzt ist. Die Dichtung 121 im warmen Bereich der Steckkupplung sorgt dafür, dass kein verdampftes Medium entweicht, auch wenn die Dichtung 118 die Steckkupplung nicht vollständig abdichtet.

In dem ersten Anschlussflansch 109 sind zwei Aufnahmen 122 für zwei Führungssäulen 123 oder Führungsstangen vorgesehen, die mit einer Schraube 124 in der Aufnahme 122 befestigt sind. Grundsätzlich sind natürlich auch andere Befestigungsarten denkbar, insbesondere Schweißen. Es kommt lediglich darauf an, dass die Führungssäulen 123 fest mit dem ersten Anschlussflansch 109 verbunden sind. Auf den Führungssäulen 123 sind Schraubenfedern 126 aufgesteckt. Die Aufnahme 122 ist so bemessen, dass eine vollständig komprimierte Schraubenfeder 126 in der jeweiligen Aufnahme 122 Platz findet.

Die Kupplungsdose 102 weist einen zweiten Anschlussflansch 132, ein äußeres Rohrstück 133 und ein inneres Rohrstück 134 auf. Die Rohrstücke 133,134 sind jeweils mit einem Ende an dem zweiten Anschlussflansch 132 angeschweißt, wobei zwischen den Rohrstücken 133,134 wiederum ein Ringspalt 136 ausgebildet ist. Die jeweils anderen Enden der Rohrstücke 133,134 sind mit der zweiten Kryoleitung 104 verbunden. Die zweite Kryoleitung weist ein Außenrohr 138 und ein Innenrohr 139 auf. Zwischen dem Außenrohr 138 und dem Innenrohr 139 ist ein Zwischenraum 141 gebildet, in dem ein Isoliervakuum herrscht, welches das Innenrohr 139 thermisch isoliert. Das Außenrohr 138 der zweiten Kryoleitung 104 ist mit dem äußeren Rohrstück 133 und das Innenrohr 139 mit dem inneren Rohrstück 134 der Kupplungsdose 102 verbunden, sodass der Zwischenraum 141 mit dem Ringspalt 136 strömungsmäßig in Verbindung steht und sich das Isoliervakuum bis in den Ringspalt 136 der Kupplungsdose 102 hinein erstreckt und für eine gute thermische Isolierung des inneren Rohrstückes 134 der Kupplungsdose 102 sorgt.

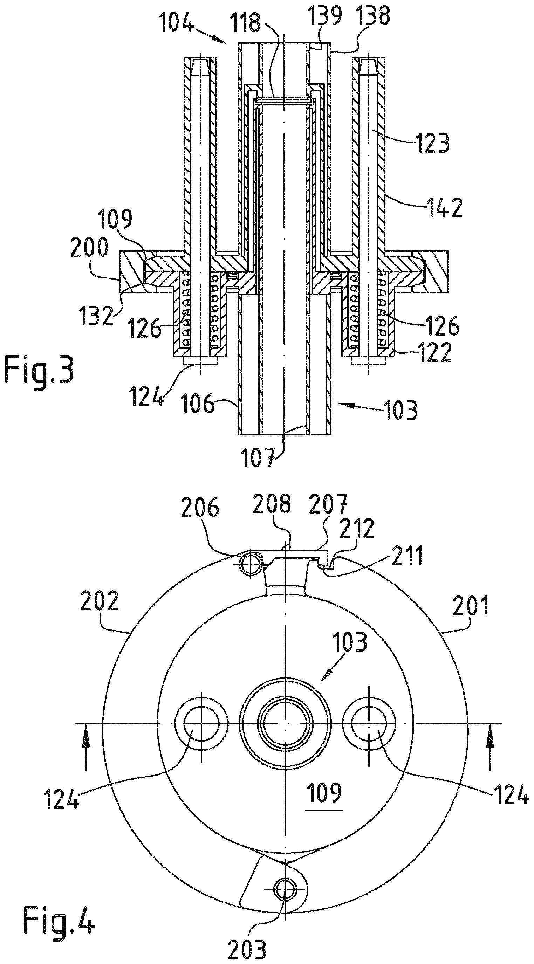

In dem zweiten Anschlussflansch 132 sind weiterhin Führungszylinder 142 vorgesehen, in welche die Führungssäulen 123 mit geringem Spiel einführbar sind, wenn der Kupplungsstecker 101 in die Kupplungsdose 102 gesteckt wird. Die Enden der Führungssäulen 123 sind angefast, um das Einführen der Führungsstangen 123 in die Führungszylinder 142 zu erleichtern. Die Schraubenfedern 126 liegen auf der Oberfläche des zweiten Anschlussflansches 132 auf und werden im Zuge der Einsteckbewegung des Kupplungsstecker 101 in die Kupplungsdose 102 zunehmend komprimiert bis der erste Anschlussflansch 109 an dem zweiten Anschlussflansch 132 anliegt. In diesem Zustand ist die Schraubenfeder komprimiert und vollständig in der Aufnahme 122 aufgenommen (Figur 3). Die Spannung der Schraubenfedern 126 erzeugt eine Kraft, die Kupplungsstecker 101 und Kupplungsdose 102 auseinandertreibt.

Figur 2a zeigt eine Draufsicht in axialer Richtung des Kupplungssteckers 101, wobei die Kryoleitung 103 im Querschnitt dargestellt ist. Figur 2a zeigt insbesondere einen Klemmring 200, der zwei Klemmschellen 201,202 aufweist. Die Klemmschellen sind über ein Gelenk 203 schwenkbar miteinander verbunden und haben einen U-förmigen Querschnitt, wobei die Öffnung des U in radialer Richtung nach innen zeigt und so bemessen ist, dass die Klemmschellen 201,202 den ersten und zweiten Anschlussflansch 109,132 übergreifen, wenn der Klemmring 200 geschlossen wird. In Figur 2b ist ein Querschnitt der Klemmschelle 202 entlang der Schnittlinie B-B in Figur 2a gezeigt.

In Figur 2a ist der Klemmring 200 in einer geöffneten Stellung dargestellt. Der Klemmring 202 weist darüber hinaus einen um ein Gelenk 206 schwenkbaren Verriegelungshaken 207 auf, der dazu eingerichtet ist, den Klemmring 200 in einer geschlossenen Stellung zu halten (Figur 4). An dem Verriegelungshaken 207 ist darüber hinaus ein Befestigungspunkt 208 für ein Lösemittel (nicht dargestellt) angeordnet, dessen Funktion weiter unten beschrieben wird.

Figur 3 zeigt die Steckkupplung 100 in einem geschlossenen Zustand, in dem der Kupplungsstecker 101 vollständig in die Kupplungsdose 102 eingesteckt ist, so dass eine abgedichtete Verbindung zwischen dem Innenrohr 107 der Kryoleitung 103 und dem Innenrohr 139 der Kryoleitung 104 hergestellt ist. Die Schraubenfedern 126 sind im zusammengebauten Zustand der Steckkupplung 100 komprimiert und finden in den Aufnahmen 122 in dem ersten Anschlussflansch 109 Platz. Die Führungssäulen 123 sind in den Führungszylindern 142 aufgenommen. Der erste Anschlussflansch 109 und der zweite Anschlussflansch 132 werden von dem Klemmring 200 gegeneinandergedrückt und in dieser Stellung gehalten. Wenn der Klemmring 200 gelöst wird, dann treiben die von den beiden Schraubenfedern 126 ausgeübten elastischen Kräfte Kupplungsstecker und -dose auseinander. Gleichzeitig werden Absperr- oder Rückschlagventile (nicht dargestellt) in den Kryoleitungen 103,104 geschlossen, so dass aus den Kryoleitungen 103,104 kein oder nur wenig Medium in die Umwelt austritt. Der Übersichtlichkeit halber sind die Absperrventile in den Figuren 1 und 3 nicht dargestellt.

Figur 4 zeigt eine Draufsicht in axialer Richtung auf den Kupplungsstecker 101, wobei die Kryoleitung 103 im Querschnitt dargestellt ist. Die Klemmschalen 201,202 übergreifen die Außenränder der Anschlussflansche 109,132 und pressen die Anschlussflansche 109,132 aufeinander. Ein Vorsprung 211 an den Verriegelungshaken 207 greift in einer Ausnehmung 212 ein. Die Klemmschalen 201,202 sind um das Gelenk 203 elastisch zu einer geöffneten Stellung hin vorgespannt, d.h. die Klemmschalen 201,202 würden sich um das Gelenk 203 gegeneinander verschwenken und sich voneinander entfernen, wenn der Verriegelungshebel 207 gelöst wird. Diese vorgespannte Öffnungsbewegung übt eine Kraft auf den Vorsprung 211 des Verriegelungshebels auf, der durch Reibung zwischen dem Vorsprung 211 und der Vertiefung 212 in einer geschlossenen Stellung gehalten ist. Zu diesem Zweck verlaufen die Anlageflächen zwischen Vorsprung 211 und Vertiefung 212 in radialer Richtung in Bezug auf das Zentrum des ersten Anschlussflansches 109.

In einem praktischen Anwendungsfall verbindet ein Seil ein Tankfahrzeug - sei es ein Schiff oder ein Tankwagen - mit dem Verriegelungshaken 207. Dazu wird das Seil an dem Tankfahrzeug und an den Befestigungspunkt 208 des Verriegelungshebels 207 befestigt. Die Länge des Seiles ist dabei so bemessen, dass das Seil lediglich eine vernachlässigbare Zugkraft auf den Verriegelungshebel 207 ausübt, wenn sich das Tankfahrzeug innerhalb zulässiger Grenzen bewegt. Diese zulässigen Grenzen sind durch die maximale Länge der Kryoleitungen 103,104 definiert. Wenn sich das Tankfahrzeug über die genannten zulässigen Grenzen hinausbewegt, dann wird der Verriegelungshebel 207 von dem Seil gelöst und der Klemmring 200 löst sich von den Anschlussflanschen 109,132 bevor die Bewegung des Tankfahrzeuges eine unzulässige Zugkraft auf die Kryoleitungen ausübt. Sobald sich der Klemmring von den Anschlussflanschen 109,132 gelöst hat, treiben die komprimierten Schraubenfedern 126 den Kupplungsstecker 101 und die Kupplungsdose 102 auseinander. Dabei verschließen sich gleichzeitig die Absperrventile in den Kryoleitungen 103,104, sodass kein Medium in die Umwelt austreten kann.

Mit der vorgeschlagenen Steckkupplung wird erreicht, dass die Steckkupplung an einem vordefinierten Punkt schnell und vor allem vollständig getrennt wird. Die für die schnelle Trennung erforderliche Kraft wird von den komprimierten Schraubenfedern 126 aufgebracht. Die Führungssäulen 123, die in den Führungszylindern 142 geführt sind, verhindern dabei, dass sich der Kupplungsstecker 101 in der Kupplungsdose 102 verkanntet und eine schnelle und vollständige Trennung der Steckkupplung behindert oder gar gänzlich verhindert.

Bei weiteren Ausführungsbespielen können auch mehr oder weniger als zwei Führungssäulen 123, Führungszylinder 142 und Schraubenfedern 126 vorgesehen sein.

Bei großen Steckkupplungen kann es sinnvoll sein, mechanische Hilfsmittel einzusetzen, mit denen die Federkraft der Schraubenfedern 126 und/oder die auf die Klemmschalen 201,202 ausgeübte Federkraft zu überwinden. Zu diesem Zweck können beispielsweise Hebelmittel zum Einsatz kommen, mit denen die Klemmschelle geschlossen wird.

**Bezugszeichenliste**

| | | | |
|---|---|---|---|
| 100 | Steckkupplung | 136 | Ringspalt |
| 101 | Kupplungsstecker | | |
| 102 | Kupplungsdose | 138 | Außenrohr |
| 103 | erste Kryoleitung | 139 | Innenrohr |
| 104 | zweite Kryoleitung | | |
| | | 141 | Zwischenraum |
| 106 | Außenrohr | | |
| 107 | Innenrohr | 200 | Klemmring |
| 108 | Zwischenraum | 201,202 | Klemmschale |
| 109 | erste Anschlussflansch | 203 | Gelenk |
| 111 | Äußeres Rohrstück | 206 | Gelenk |
| 112 | Inneres Rohrstück | 207 | Verriegelungshaken |
| 113 | Distales Ende | 208 | Befestigungspunkt |
| 114 | Ringspalt | | |
| | | 211 | Vorsprung |
| 116 | Isolierende Hülse | 212 | Vertiefung |
| 117 | Überstehender Rand | | |
| 118 | Dichtung | | |
| 120 | Ringnut | | |
| 121 | Dichtung | | |
| 122 | Aufnahme | | |
| 123 | Führungssäule | | |
| 124 | Schraube | | |
| 126 | Schraubenfeder | | |
| 132 | zweiter Anschlussflansch | | |
| 133 | Äußeres Rohrstück | | |
| 134 | Inneres Rohrstück | | |

## Patentansprüche

1. Steckkupplung zum Verbinden einer ersten mit einer zweiten doppelwandigen vakuumisolierten Kryoleitung (103,104), wobei die Steckkupplung (100) einen Kupplungsstecker (101) und eine Kupplungsdose (102) umfasst,
- wobei der Kupplungsstecker (101) ein inneres und ein äußeres Rohrstück (111,112) sowie einen ersten Anschlussflansch (109) aufweist und mit der ersten Kryoleitung (103) verbunden ist,
- wobei die Kupplungsdose (102) ein inneres und ein äußeres Rohrstück (133,134) sowie einen zweiten Anschlussflansch (132) aufweist und mit der zweiten Kryoleitung (104) verbunden ist
- wobei der Kupplungsstecker (101) in die Kupplungsdose (102) einsteckbar ist, die von Fixiermitteln (200,201, 202) in einem zusammengesteckten Zustand gehalten sind,
- wobei eine Führungssäule (123) an dem Kupplungsstecker (101) oder an der Kupplungsdose (102) angeordnet ist, die in ein Führungsmittel (142) an der Kupplungsdose (102) oder an dem Kupplungsstecker (101) aufgenommen ist, wenn der Kupplungsstecker in die Kupplungsdose gesteckt ist und wobei an der Führungssäule (123) elastische Mittel (126) angeordnet sind, die im zusammengebauten Zustand der Steckkupplung gespannt sind und Kupplungsstecker bzw. Kupplungsdose mit einer elastischen Kraft beaufschlagen, die bestrebt ist, Kupplungsstecker und Kupplungsdose voneinander zu trennen.

2. Steckkupplung nach Anspruch 1, **dadurch gekennzeichnet, dass** mehrere Führungssäulen (123) vorhanden sind, denen jeweils ein elastisches Mittel (106. 20) zugeordnet ist.

3. Steckkupplung nach Anspruch 1 oder 2, **dadurch gekennzeichnet, dass** das elastische Mittel eine Feder (126) ist.

4. Steckkupplung nach Anspruch 3, **dadurch gekennzeichnet, dass** die Feder als Schraubenfeder (126) ausgebildet ist, die auf eine Führungssäule (123) gesteckt ist.

5. Steckkupplung nach einem der vorstehenden Ansprüche, **dadurch gekennzeichnet, dass** jeder Führungssäule (123) eine Aufnahme (122) zugeordnet ist, die so bemessen ist, dass die komprimierte Schraubenfeder (126) darin Platz findet.

6. Steckkupplung nach einem der vorstehenden Ansprüche, **dadurch gekennzeichnet, dass** jeder Führungssäule (123) ein Führungszylinder (142) zugeordnet ist, in welchem die jeweils zugeordnete Führungssäule aufgenommen ist, wenn der Kupplungsstecker in die Kupplungsdose gesteckt ist.

7. Steckkupplung nach einem der der Ansprüche 2-6, **dadurch gekennzeichnet, dass** die Führungssäulen (123) abwechselnd an dem Kupplungsstecker (101) bzw. an der Kupplungsdose (102) angeordnet sind.

8. Steckkupplung nach einem der vorstehenden Ansprüche, **dadurch gekennzeichnet, dass** die Fixiermittel als Klemmschellen (201,202) ausgebildet sind.

9. Steckkupplung nach Anspruch 8, **dadurch gekennzeichnet, dass** die Klemmschellen (201,202) in eine geöffnete Stellung vorgespannt sind.

10. Steckkupplung nach Anspruch 8 oder 9, **dadurch gekennzeichnet, dass** ein Verriegelungshaken (207) die Klemmschellen (201,202) in einem geschlossenen Zustand hält.

11. Steckkupplung nach Anspruch 10, **dadurch gekennzeichnet, dass** der Verriegelungshaken (207) durch ein Betätigungsmittel lösbar ist.

12. Steckkupplung nach einem der Ansprüche 8 bis 11, **dadurch gekennzeichnet, dass** an den Klemmschellen (201,202) Betätigungsmittel angeordnet sind, die das Schließen der Klemmschellen erleichtern.

13. Verladeeinrichtung für kryogene Fluide mit einer Steckkupplung (100) nach einem der Ansprüche 1 bis 12.

## Claims

1. A plug-in coupling for connecting a first to a second double-walled vacuum insulated cryogenic line (103,104), said plug-in coupling (100) comprising a coupling plug (101) and a coupling socket (102),
- wherein the coupling plug (101) has an inner and an outer tubular piece (111,112) and a first connecting flange (109) and is connected to the first cryogenic line (103),
- said coupling socket (102) having inner and outer tubular members (133, 134) and a second connecting flange (132) and being connected to said second cryogenic line (104)
- wherein the coupling plug (101) is insertable into the coupling socket (102), which are held in a mated state by fixing means (200, 201, 202)
- wherein a guide column (123) is arranged on the coupling plug (101) or on the coupling socket (102), which is received in a guide means (142) on the coupling socket (102) or on the coupling plug (101) when the coupling plug is inserted into the coupling socket, and wherein elastic means (126) are arranged on the guide column (123), which elastic means are tensioned in the assembled state of the plug-in coupling and press the coupling plug or the coupling socket, respectively, with an elastic force (126) which tends to separate the coupling plug and coupling socket from one another.

2. Plug-in coupling according to Claim 1, **characterized by** the presence of a plurality of guide columns (123), which are each assigned an elastic means (126).

3. Plug-in coupling according to Claim 1 or 2, **characterized in that** the elastic means is a spring (126).

4. Plug-in coupling according to Claim 3, **characterized in that** the spring is designed in the form of a helical spring (126), which is plugged onto a guide column (123).

5. Plug-in coupling according to one of the preceding claims, **characterized in that** each guide column (123) is assigned a mount (122), which is dimensioned such that the compressed helical spring (126) is accommodated therein.

6. Plug-in coupling according to one of the preceding claims, **characterized in that** each guide column (123) is assigned a guide cylinder (142), in which the respectively associated guide column is accommodated when the coupling plug has been plugged into the coupling socket.

7. Plug-in coupling according to one of Claims 2-6, **characterized in that** the guide columns (123) are arranged alternately on the coupling plug (101) and on the coupling socket (102).

8. Plug-in coupling according to one of the preceding claims, **characterized in that** the fixing means are designed in the form of clamps (201, 202).

9. Plug-in coupling according to claim 8, **characterized in that** the clamps (201, 202) are prestressed into an open position.

10. Plug-in coupling according to claim 8 or 9, **characterized in that** a locking hook (207) retains the clamps (201, 202) in a closed state.

11. Plug-in coupling according to Claim 10, **characterized in that** the locking hook (207) can be disengaged by an actuating means.

12. Plug-in coupling according to one of claims 8 to 11, **characterized in that** actuating means are arranged on the clamps (201, 202), said means making it easier for the clamps to be closed.

13. Loading system for cryogenic fluids, having a plug-in coupling (100) according to one of Claims 1 to 12.

## Revendications

1. Raccord enfichable pour le raccordement d'une première avec une deuxième conduite cryogénique isolée sous vide à double paroi (103, 104), dans lequel le raccord enfichable (100) comprend un connecteur mâle (101) et un connecteur femelle (102),
- dans lequel le connecteur mâle (101) comprend un élément tubulaire interne et un élément tubulaire externe (111, 112) ainsi qu'une première bride de raccordement (109) et est relié avec la première conduite cryogénique (103),
- dans lequel le connecteur femelle (102) comprend un élément tubulaire interne et un élément tubulaire externe (133, 134) ainsi qu'une deuxième bride de raccordement (132) et est relié avec la deuxième conduite cryogénique (104),
- dans lequel le connecteur mâle (101) peut être enfiché dans le connecteur femelle (102), et ils sont maintenus dans l'état enfiché par des moyens de fixation (200, 201, 202),
- dans lequel une colonne de guidage (123) est disposée sur le connecteur mâle (101) ou sur le connecteur femelle (102), qui est logée dans un moyen de guidage (142) sur le connecteur femelle (102) ou sur le connecteur mâle (101), lorsque le connecteur mâle est enfiché dans le connecteur femelle et dans lequel, sur la colonne de guidage (123), sont disposés des moyens élastiques (126) qui sont serrés dans l'état enfiché du raccord enfichable et qui sollicitent le connecteur mâle respectivement le connecteur femelle avec une force élastique qui vise à séparer le connecteur mâle du connecteur femelle.

2. Raccord enfichable selon la revendication 1, **caractérisé en ce que** plusieurs colonnes de guidage (123) sont prévues, un moyen élastique (106.20) correspondant à chacune de celles-ci.

3. Raccord enfichable selon la revendication 1 ou 2, **caractérisé en ce que** le moyen élastique est un ressort (126).

4. Raccord enfichable selon la revendication 3, **caractérisé en ce que** le ressort est conçu comme un ressort hélicoïdal (126) qui est enfiché sur une colonne de guidage (123).

5. Raccord enfichable selon l'une des revendications précédentes, **caractérisé en ce que**, à chaque colonne de guidage (123), correspond un logement (122) qui est dimensionné de façon à ce que le ressort hélicoïdal (126) comprimé y trouve une place.

6. Raccord enfichable selon l'une des revendications précédentes, **caractérisé en ce que**, à chaque colonne de guidage (123), correspond un cylindre de guidage (142) dans lequel la colonne de guidage correspondante est logée lorsque le connecteur mâle est enfiché dans le connecteur femelle.

7. Raccord enfichable selon l'une des revendications 2-6, **caractérisé en ce que** les colonnes de guidage (123) sont disposées de manière alternée sur le connecteur mâle (101 ou sur le connecteur femelle (102).

8. Raccord enfichable selon l'une des revendications précédentes, **caractérisé en ce que** les moyens de fixation sont conçus comme des colliers de serrage (201, 202).

9. Raccord enfichable selon la revendication 8, **caractérisé en ce que** les colliers de serrage (201, 202) sont précontraints dans une position ouverte.

10. Raccord enfichable selon la revendication 8 ou 9, **caractérisé en ce qu'**un crochet de verrouillage (207) maintient les colliers de serrage (201, 202) dans un état fermé.

11. Raccord enfichable selon la revendication 10, **caractérisé en ce que** le crochet de verrouillage (207) peut être détaché par un moyen d'actionnement.

12. Raccord enfichable selon l'une des revendications 8 à 11, **caractérisé en ce que**, sur les colliers de serrage (201, 202), sont disposés des moyens d'actionnement qui facilitent la fermeture des colliers de serrage.

13. Dispositif de chargement pour des fluides cryogéniques avec un raccord enfichable (100) selon l'une des revendications 1 à 12.
